# FASCICULE DE BREVET EUROPEEN

(11) **EP 1 274 537 B1**
(45) Date de publication et mention de la délivrance du brevet: **09.08.2006**
(21) Numéro de dépôt: 01925648.6
(22) Date de dépôt: 13.04.2001
(51) Int. Cl.: B23Q 1/00

(54) **DISPOSITIF MODULAIRE PORTE-OUTILS**
MODULARE WERKZEUGHALTER
MODULAR TOOL-HOLDING DEVICE

(30) Priorité: 17.04.2000 FR 0004948
(43) Date de publication de la demande: 15.01.2003
(73) Titulaire: Finuchem Technologies de Soudage, 93166 Noisy Le grand (FR)
(72) Inventeur: BEFFRIEU, Michel, F-93460 Gournay sur Marne (FR)
(74) Mandataire: Bertrand, Didier
(86) Numéro de dépôt international: PCT/FR2001/001150
(87) Numéro de publication internationale: WO 2001/078941

(56) Documents cités:
- EP-A- 0 136 431
- EP-A- 0 455 523
- DE-A- 3 625 787
- DE-A- 3 930 676
- FR-A- 2 315 029
- FR-A- 2 473 094
- US-A- 4 782 679
- PATENT ABSTRACTS OF JAPAN vol. 016, no. 322 (E-1233), 14 juillet 1992 (1992-07-14) & JP 04 094088 A (TEIJIN SEIKI CO LTD), 26 mars 1992 (1992-03-26)

## Description

La présente invention concerne un dispositif modulaire destiné à recevoir des outils, en particulier des outils de préhension, et leurs moyens d'alimentation et de commande.

De tels dispositifs, également appelés préhenseurs, sont utilisés en particulier dans des lignes d'assemblage de pièces de carrosserie de véhicules automobiles et sont montés soit sur un support fixe tel qu'une colonne, soit sur un support mobile tel qu'une tête de robot.

Usuellement, de tels préhenseurs sont conçus et fabriqués sur mesure en fonction des outils à porter, de la géométrie des pièces à manipuler et des trajectoires relatives de ces pièces par rapport aux outils. Ces préhenseurs sont fabriqués généralement en tubes d'acier ou d'aluminium pliés et soudés, ou en profilés d'aluminium débités à la demande, dans des dimensions et des épaisseurs propres à résister aux charges portées et aux importants efforts subis en travail.

Ces préhenseurs connus ont en conséquence un poids élevé qui entraîne, lorsqu'ils sont mobiles, une forte consommation d'énergie pour leurs déplacements. Leur prix de revient est grevé par une fabrication artisanale sur mesure, les préhenseurs étant en pratique différents les uns des autres.

Un autre inconvénient de ces préhenseurs connus réside en un long temps d'immobilisation en cas de défaut ou d'accident.

Pour pallier ces inconvénients, on a proposé (voir EP-B-0 455 523) de réaliser un dispositif de préhension constitué d'un bloc-support sur lequel sont fixés des bras porte-outils, le bloc-support comportant au moins un distributeur fluidique d'alimentation d'un outil et une partie des circuits de fluide d'alimentation et des circuits électriques de commande des outils, l'autre partie de ces circuits se prolongeant dans les bras.

Les bras de ce préhenseur comportent de préférence des orifices internes constituant une partie des circuits de fluide, un orifice central et des alvéoles externes dans lesquels sont installées des liaisons électriques faisant partie des circuits électriques de commande.

En pratique, les bras ont été réalisés sous forme d'assemblages de tronçons de profilés d'aluminium extrudés et usinés pour obtenir la forme désirée. On a ainsi considérablement diminué le poids du préhenseur et facilité sa réparation par échange de tronçons de profilés endommagés. Ces tronçons de profilés permettent en outre un assemblage modulaire, ce qui diminue le coût de fabrication et permet en outre un réaménagement de la préhension pour une utilisation différente.

Le préhenseur qui vient d'être décrit présente cependant divers défauts dus à la forme des profilés utilisés, au mode d'assemblage des tronçons de profilés et à la structure du bloc-support.

Un premier inconvénient réside dans la forme des profilés utilisés qui doivent contenir les circuits de fluide et les circuits électriques prolongeant respectivement les circuits intégrés dans le bloc-support. Il en résulte que la portion centrale du profilé doit être munie d'orifices de passage de ces circuits, ce qui réduit la section pleine de cette portion centrale, en entraînant une diminution de la résistance à la torsion et au flambage qui ne peut être compensée que par une augmentation de la section globale du profilé, avec un accroissement correspondant de l'encombrement, du poids et du prix de revient. En outre, l'accessibilité des circuits est réduite et toute intervention sur les circuits nécessite un démontage.

Un deuxième inconvénient est lié au mode d'assemblage des tronçons de profilé qui, en pratique, est réalisé par des orifices taraudés formés dans les flasques d'extrémités des tronçons de profilés, orifices taraudés dans lesquels sont vissés des boulons de fixation ainsi que des goupilles de centrage. Un tel montage entraîne un surcoût d'usinage d'orifices taraudés à des positions très précises et, en outre, un assemblage difficile par mise en coïncidence coaxiale des goupilles de centrage de deux tronçons adjacents.

Un troisième inconvénient résulte de la fonction du bloc-support qui doit porter les distributeurs fluidiques et contenir une partie des circuits de fluides et des circuits électriques. Il s'ensuit une structure encombrante et de fabrication compliquée, onéreuse et non identique pour des préhenseurs différents.

La présente invention vise en conséquence à fournir un nouveau préhenseur ne présentant pas les inconvénients des dispositifs connus et qui permet en particulier, par sa conception, d'utiliser des blocs-supports simples assurant seulement une fonction de support mécanique des bras, les bras étant eux-mêmes réalisés avec un encombrement et un poids réduits tout en ayant une résistance mécanique optimale.

A cet effet, l'invention a pour objet un dispositif porte-outils constitué d'au moins un bloc-support sur lequel sont montés des bras porte-outils constitués de profilés modulaires caractérisé par le fait que lesdits profiles sont constitués par des portions d'extrudés usinés pour ménager deux flasques d'extrémité munis d'au moins trois alésages longitudinaux périphériques, l'assemblage d'un profilé à une autre pièce telle qu'un autre profilé, un bloc-support, une interface ou un support étant réalisé au moyen de douilles taraudées à tête épaulée ajustées respectivement dans un desdits alésages avec la tête de la douille en appui contre la face intérieure du flasque de profilé correspondant, chaque douille étant insérée au moins partiellement dans un alésage correspondant de ladite autre pièce, une vis étant vissée dans l'alésage taraudé de chacune desdites douilles à l'extrémité opposée à ladite tête avec interposition d'au moins une rondelle ou d'au moins une entretoise.

On obtient ainsi des bras faciles à assembler et à démonter, avec une résistance mécanique d'assemblage très élevée. Les alésages de montage des douilles permettent un positionnement aisé et une mise en place facile et rapide des douilles avant vissage des vis jusqu'à un serrage assurant un assemblage stable. Ces alésages proviennent du profilé d'origine lors de l'extrusion, de sorte que leur coût est nul.

De préférence, lesdits profilés sont munis de rainures longitudinales externes à flancs ondulés ou rainurés dans lesquelles sont en prise des vis de fixation de supports de circuits de fluide et/ou de circuits électriques et/ou d'organes de commande des outils. Ces rainures longitudinales, venues d'extrusion, permettent donc la fixation des circuits d'alimentation des outils, de préférence à l'intérieur de gaines, de sorte que ces circuits ne nécessitent plus de passages à l'intérieur du bras.

Avantageusement, les profilés comportent une ouverture centrale longitudinale munie d'au moins une entretoise d'une seule pièce, par exemple en forme de croix ou de X. L'ouverture centrale, qui sert à alléger le profilé et économiser de la matière, et son entretoise, qui assure le raidissement et renforce la résistance mécanique aussi bien en torsion qu'en flambage, viennent d'extrusion avec le profilé constitutif des tronçons.

La structure caractéristique des bras selon l'invention permet de constituer le bloc-support de manière extrêmement simple, économique et utilisable pour divers préhenseurs.

En effet, selon une caractéristique de l'invention, le bloc-support est constitué par une boîte de forme parallélépipédique fermée par un couvercle, au moins certaines des faces de ladite boîte comportant des alésages de fixation de profilés ou de pièces d'interface de fixation de profilés.

L'invention sera bien comprise à la lecture de la description suivante d'un exemple de réalisation, en référence au dessin annexé dans lequel :
la figure 1 est une vue schématique en perspective explosée d'une partie d'un dispositif de préhension selon un exemple de réalisation de l'invention,
la figure 2 est une vue schématique en perspective explosée illustrant le mode d'assemblage des bras du dispositif,
la figure 3 est une vue schématique en coupe transversale d'un flasque d'un tronçon et
la figure 4 est une vue schématique en coupe transversale au milieu d'un tronçon.

Un dispositif modulaire de préhension selon l'invention comprend au moins un bloc-support 1 sur lequel sont montés, directement ou indirectement, des bras constitués par au moins un profilé 2 dont la structure, caractéristique de l'invention, sera décrite ci-après.

Le bloc-support 1 est constitué par une boîte parallélépipédique 3 fermée par un couvercle 4. Au moins certaines des petites faces de la boite 3 sont munies d'alésages traversants 5.

Les profilés 2 sont réalisés par extrusion d'un alliage métallique léger et résistant, en particulier un alliage d'aluminium, l'extrudé étant coupé en tronçons de longueur convenable puis, les tronçons sont usinés pour ménager deux flasques d'extrémité 6 et une zone centrale 7 de section réduite.

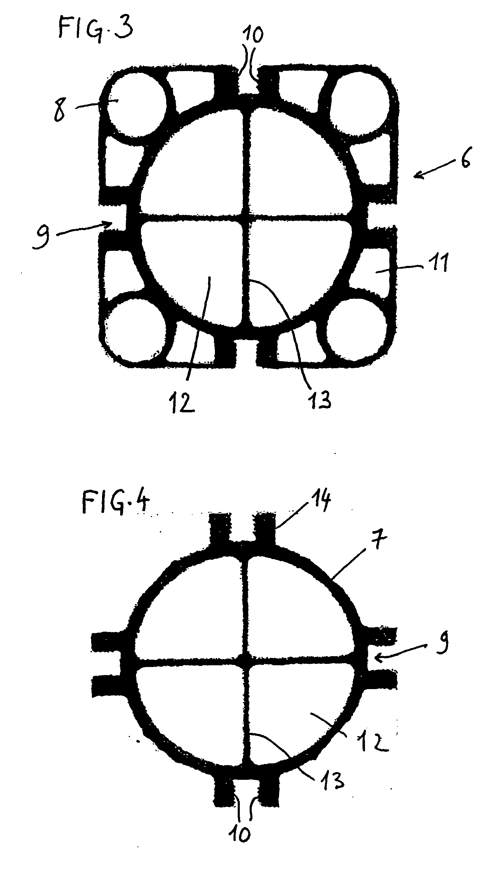

L'extrudé d'origine a la section des flasques d'extrémité 6 représentés à la figure 3. Un flasque 6 a une section sensiblement carrée munie aux quatre coins d'alésages lisses 8. Entre deux alésages 8 adjacents est formée une rainure 9 dont les flancs comportent des rainures ou des ondulations longitudinales 10. Entre chaque rainure 9 et chaque alésage 8 est formé un vide 11.

Le flasque 6 comporte une grande ouverture centrale 12 longitudinale et une entretoise monobloc 13, en forme de croix dans l'exemple représenté. L'ensemble qui vient d'être décrit est directement issu de l'extrudé fabriqué au moyen d'une filière de forme complémentaire.

L'usinage du tronçon de profilé supprime toutes les saillies extérieures à l'alésage central 12, à l'exception de quatre nervures longitudinales 14 contenant les rainures 9, pour former une section centrale 7 de section réduite (figure 4).

On comprendra que la quantité de matière enlevée au cours de l'usinage est faible du fait de la suppression des alésages 8 et des vides 11, de sorte que le coût en matière est réduit au minimum.

L'entretoise 13, les nervures 14 et les flasques 6 contribuent à assurer une résistance mécanique suffisante du profilé, aussi bien en torsion qu'au flambage.

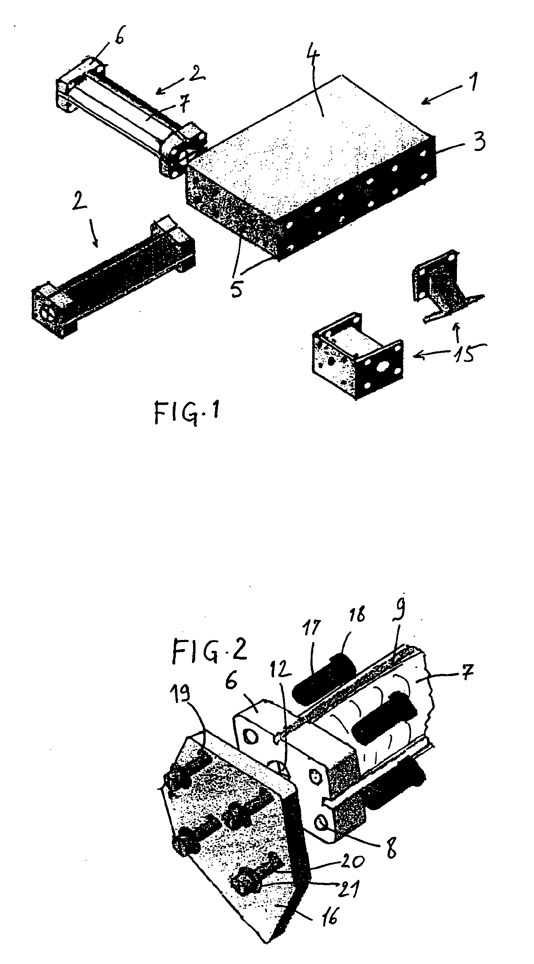

Les profilés 2 sont assemblés entre eux, fixés au bloc-support 1, directement ou par l'intermédiaire d'interfaces 15 (figure 1), ou portent des outils par l'intermédiaire de supports (16) (figure 2) en utilisant les alésages lisses 8 des flasques 6, lesquels alésages 8 sont accessibles des deux côtés. Dans chacun des alésages 8 est insérée et ajustée une douille taraudée 17 munie d'une tête épaulée 18 qui fait saillie au moins partiellement dans un alésage correspondant de la pièce à laquelle doit être assemblé le profilé 2, à savoir un alésage 5 de la boîte 3, un alésage 19 d'un support 16 (figure 2), etc.

Puis, une vis 20 est vissée dans l'alésage taraudé de la douille 17 par l'extrémité opposée à la tête 18, avec interposition d'au moins une rondelle 21 lorsque la douille 17 ne fait pas saillie au-delà de la pièce (cas de la figure 2), ou d'au moins une entretoise dans le cas contraire.

On conçoit qu'un tel montage est extrêmement aisé tout en assurant une rigidité d'assemblage élevée déterminée par la section de la douille 17.

Les rainures 9 à flancs rainurés ou ondulés 10 peuvent recevoir des vis de fixation (non représentées) de supports de circuits de fluide et ou de circuits électriques, de préférence sous gaine. On évite ainsi le passage de ces circuits dans le bloc-support 1 qui conserve ainsi une résistance mécanique élevée. Ces circuits sont facilement accessibles en cas de réparation, pour l'entretien, le contrôle, etc. et sont faciles à monter et démonter ; le montage des circuits directement sur les bras dans des supports appropriés assure une stabilité élevée sans augmenter l'encombrement d'ensemble du dispositif.

Les rainures 9 peuvent également être utilisées pour la fixation de divers composants (non représentés) tels que distributeurs de fluide, dispositifs de commande électrique, etc., dont le montage peut être effectué au choix près du bloc-support ou près de l'extrémité du bras. Les mêmes profilés modulaires peuvent être utilisés dans le cas où certains composants, par exemple les distributeurs de fluide, sont intégrés dans les outils portés par les bras.

Le dispositif selon l'invention permet également de monter, de manière en soi connue, un ou plusieurs compresseurs d'alimentation en fluide pour les outils.

Selon une forme de réalisation de l'invention, les alésages centraux 12 des profilés 2 peuvent être utilisés comme réservoirs de fluide sous pression, bien entendu en étanchant convenablement les raccordements d'extrémité des profilés.

## Revendications

1. Dispositif porte-outils constitué d'au moins un bloc-support (1) sur lequel sont montés des bras porte-outils constitués de profilés (2) modulaires,
**caractérisé par le fait que** lesdits profilés (2) sont constitués par des portions d'extrudés usinés pour ménager deux flasques d'extrémité (6) munis d'au moins trois alésages (8) longitudinaux périphériques, l'assemblage d'un profilé (2) à une autre pièce telle qu'un autre profilé (2), un bloc-support (1), une interface (15) ou un support (16) étant réalisé au moyen de douilles taraudées (17) à tête épaulée (18) ajustées respectivement dans un desdits alésages (8) avec la tête (18) de la douille (17) en appui contre la face intérieure du flasque (6) de profilé (2) correspondant, chaque douille (17) étant insérée au moins partiellement dans un alésage (19) correspondant de ladite autre pièce, une vis (20) étant vissée dans l'alésage taraudé de chacune desdites douilles (17) à l'extrémité opposée à ladite tête (18) avec interposition d'au moins une rondelle (21) ou d'au moins une entretoise.

2. Dispositif selon la revendication 1,
**caractérisé en ce que** lesdits profilés (2) sont munis de rainures longitudinales (9) externes à flancs (10) ondulés ou rainurés dans lesquelles sont en prise des vis de fixation de supports de circuits de fluide et/ou de circuits électriques et/ou d'organes de commande des outils.

3. Dispositif selon la revendication 2,
**caractérisé en ce que** lesdites rainures (9) sont ménagées dans des saillies longitudinales (14) du profilé (2).

4. Dispositif selon l'une des revendications 1 à 3,
**caractérisé en ce que** les profilés (2) comportent une ouverture centrale (12) longitudinale.

5. Dispositif selon la revendication 4,
**caractérisé en ce que** ladite ouverture centrale (12) est munie d'au moins une entretoise (13) d'une seule pièce, par exemple en forme de croix ou de X.

6. Dispositif selon l'une des revendications 4 et 5,
**caractérisé en ce que** ladite ouverture centrale (12) forme un réservoir de fluide sous pression.

7. Dispositif selon l'une des revendications 1 à 6,
**caractérisé en ce que** ledit bloc-support (1) est constitué par une boîte (3) de forme parallélépipédique fermée par un couvercle (4), au moins certaines des faces de ladite boîte (3) comportant des alésages (5) de fixation de profilés (2) ou de pièces d'interface (15) de fixation de profilés (2).

8. Dispositif selon l'une des revendications 1 à 7,
**caractérisé en ce que** les circuits de fluide sont disposés à l'extérieur du bloc-support (1).

9. Dispositif selon l'une des revendications 1 à 8,
**caractérisé en ce que** les circuits électriques sont disposés à l'extérieur du bloc-support (1).

## Claims

1. Tool-holding device consisting of at least one support block (1) on which are mounted tool-holding arms consisting of modular profiles (2), **characterized in that** the said profiles (2) consist of extruded portions machined to form end flanges (6) provided with at least three peripheral longitudinal bores (8), the assembly of a profile (2) to another part such as another profile (2), a support block (1), an interface (15) or a support (16) being produced by means of tapped bushings (17) having a shouldered head (18) which are respectively fitted into one of the said bores (8) with the head (18) of the bushing (17) bearing against the inner face of the flange (6) of the corresponding profile (2), each bushing (17) being inserted at least partially into a corresponding bore (19) in the said other part, a screw (20) being screwed into the tapped bore in each of the said bushings (17) at the end opposed to the said head (18), with interposition of at least one washer (21) or at least one spacer.

2. Device according to Claim 1, **characterized in that** the said profiles (2) are provided with external longitudinal grooves (9) having rippled or grooved flanks (10) and in which are engaged fixing screws for supports for fluid circuits and/or electrical circuits and/or tool control elements.

3. Device according to Claim 2, **characterized in that** the said grooves (9) are formed in longitudinal projections (14) of the profile (2).

4. Device according to one of Claims 1 to 3, **characterized in that** the profiles (2) have a longitudinal central opening (12).

5. Device according to Claim 4, **characterized in that** the said central opening (12) is provided with at least one single-piece spacer (13), for example having a cruciform or X shape.

6. Device according to either of Claims 4 and 5, **characterized in that** the said central opening (12) forms a pressurized-fluid reservoir.

7. Device according to one of Claims 1 to 6, **characterized in that** the said support block (1) consists of a box (3) of parallelepipedal shape closed by a cover (4), at least some of the faces of the said box (3) having bores (5) for the fastening of profiles (2) or of interface parts (15) for the fastening of profiles (2).

8. Device according to one of Claims 1 to 7, **characterized in that** the fluid circuits are arranged outside the support block (1).

9. Device according to one of Claims 1 to 8, **characterized in that** the electrical circuits are arranged outside the support block (1).

## Patentansprüche

1. Werkzeughalter, der aus wenigstens einem Supportblock (1) gebildet ist, auf welchen die Werkzeughalterarme festgelegt bzw. montiert sind, die aus modularen Profilen (2) gebildet sind,
**dadurch gekennzeichnet, daß** die Profile (2) aus maschinell bearbeiteten extrudierten Abschnitten gebildet sind, um zwei Endflansche (6) vorzusehen, die mit wenigstens drei längsverlaufenden Umfangsbohrungen (8) versehen sind, wobei der Zusammenbau eines Profils (2) mit einem anderen Stück, wie einem anderen Profil (2), einem Blocksupport bzw. Supportblock (1), einer Schnittstelle bzw. einem Zwischenstück (15) oder einem Support (16) mittels Hülsen bzw. Buchse bzw. Fassung (17) mit Innengewinde mit einem verbreiterten Kopf (18) realisiert ist, die entsprechend in den Bohrungen (8) mit dem Kopf (18) der Hülse (17) in Anschlag bzw. Abstützung gegen die Innenfläche des Flansches (6) des entsprechenden Profils (2) eingestellt sind, wobei jede Hülse (17) wenigstens teilweise in eine entsprechende Bohrung (19) des entsprechenden anderen Stücks eingesetzt ist, wobei eine Schraube (20) in die Gewindebohrung von jeder der Hülsen (17) an dem dem Kopf (18) gegenüberliegenden Ende unter Zwischenlagerung von wenigstens einer Beilagscheibe (21) oder wenigstens einer Versteifung bzw. Zwischenstück bzw. Distanzring bzw. Steg bzw. Abstandshülse bzw. Querträger verschraubt ist.

2. Vorrichtung nach Anspruch 1,
**dadurch gekennzeichnet, daß** die Profile (2) mit äußeren Längsrillen (9) mit gewellten oder mit Rillen versehenen Flanken (10) versehen sind, in welche die Festlegungsschrauben der Supporte bzw. Abstützungen von Fluidkreisläufen und/oder elektrischen Schaltkreisen und/oder von Steuer- bzw. Regelorganen der Werkzeuge in Eingriff sind.

3. Vorrichtung nach Anspruch 2,
**dadurch gekennzeichnet, daß** die Rille (9) in entsprechenden Längsvorsprüngen (14) des Profils (2) hergestellt bzw. vorgesehen sind.

4. Vorrichtung nach einem der Ansprüche 1 bis 3,
**dadurch gekennzeichnet, daß** die Profile (2) eine zentrale Längsöffnung (12) umfassen.

5. Vorrichtung nach Anspruch 4,
**dadurch gekennzeichnet, daß** die zentrale Öffnung (12) mit wenigstens einer einstückigen Versteifung bzw. Zwischenstück bzw. Distanzring bzw. Steg bzw. Abstandshülse bzw. Querträger (13) beispielsweise in Form eines Kreuzes oder eines X versehen ist.

6. Vorrichtung nach Anspruch 4 oder 5,
**dadurch gekennzeichnet, daß** die zentrale Öffnung (12) ein Reservoir für Fluid unter Druck ausbildet.

7. Vorrichtung nach einem der Ansprüche 1 bis 6,
**dadurch gekennzeichnet, daß** der Supportblock (1) aus einem parallelepipedisch geformten Gehäuse bzw. Behälter (3) gebildet ist, der durch einen Deckel (4) verschlossen ist, wobei wenigstens einige der Seiten des Behälters (3) Festlegungsbohrungen (5) der Profile (2) oder der Zwischenstücke (15) der Festlegungsprofile (2) aufweisen.

8. Vorrichtung nach einem der Ansprüche 1 bis 7,
**dadurch gekennzeichnet, daß** die Fluidkreisläufe außerhalb des Supportblocks (1) ausgebildet sind.

9. Vorrichtung nach einem der Ansprüche 1 bis 8,
**dadurch gekennzeichnet, daß** die elektrischen Schaltkreise außerhalb des Supportblocks (1) ausgebildet sind.
